# EUROPEAN PATENT APPLICATION

(11) **EP 2 680 212 A1**
(43) Date of publication of application: **01.01.2014**
(21) Application number: 13171228.3
(22) Date of filing: 10.06.2013
(51) Int. Cl.: G06Q 30/02, G06Q 50/00

(54) **Simultaneous experience of online content**

(30) Priority: 26.06.2012 US 201213533930
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

The disclosure relates to simultaneous experience of online content via online services, such as in social networks. A method according to an embodiment comprises receiving from a first user of the online service a selection of online content provided by the online service; providing to the first user a list of further users of the online service in response to a set of selection rules defining selection criteria for users; receiving from the first user a selection of one or more second users from the list of further users; inviting the one or more second users to join a simultaneous experience of the online content; defining a group of users including the first user and the second users accepting the invitation; and providing the online content to the group of users in response to a set of access rules defining access criteria for the online content.

## Description

### TECHNICAL FIELD

The present disclosure relates to a method for enabling a plurality of users of an online service to simultaneously experience online content, and to a system hosting an online service which enables a simultaneous experience of online content. In particular the present disclosure may relate to simultaneous experience of online content in a social network.

### BACKGROUND

Online services, such as social networks, user networks, and gaming networks typically enable users to upload and share content and other information with other users. For example, uploaded content, such as an image, audio file, or video file uploaded by a user may be presented by the online service on a personalized site or page of the user. Other users may browse the pages or sites of the user and may interact with the uploaded content in order to view or experience the content. For example, another user may click on or touch an icon representing the uploaded content in order to start a download or stream of the online content to a local client device operated by the user. Thereafter, the user may view the image or video file, listen to the audio data, or otherwise experience the content. Also, dedicated platforms exist, which enable upload of, for example, video files. Users of the platforms may browse the content and view the respective files on their local client devices. Yet, current approaches for providing online content are typically directed at one viewer only and do not allow a plurality of users to view the same content together at the same time on their respective client devices. Also, there is no integrated approach enabling a user to invite other users to experience the content together. Instead, the user would have to use other communication media to call attention of other users to the respective online content.

### SUMMARY

Embodiments described herein enable an integrated experience of online content by an online service, such as a social network. Embodiments described herein enable and further improve the invitation of other users of the online service to a simultaneous experience of online content and an automatic management which guarantees that certain requirements are being met before and during the simultaneous experience.

A first aspect of the present disclosure provides a method for enabling a plurality of users of an online service to simultaneously experience online content, comprising the steps of receiving from a first user of the online service a selection of online content provided by the online service and providing to the first user a list of further users of the online service in response to a set of selection rules defining selection criteria for users of the online service. In turn, a selection of one or more second users from the list of further users is received from the first user and the one or more second users are invited to join a simultaneous experience of the online content. A group of users, including the first user and at least one of the second users accepting the invitation, is defined, and the online content is provided as a simultaneous experience to the group of users in response to a set of access rules defining access criteria for the online content.

The method allows for an integrated simultaneous experience of online content, which is started by the first user, also referred to as an initiator or host in the subsequent description, and enables the first user to experience the online content together with at least one second user, which may be referred to as a participant in the subsequent description. In addition, the method automatically determines possible participants based on selection rules and, thereafter, starts the simultaneous experience based on access rules. Therefore, the method is a highly flexible approach that enables a direct selection of possible participants and a flexible control of the initiation of the simultaneous experience. Thus, users of the online service are allowed to experience content together by, for example, watching a video, listening to music, or playing a game, after meeting requirements defined by the selection and access rules.

The online service may be configured to receive from the first user a selection of online content. For example, the first user may use an interface displayed on his client device and provided by the online service enabling the first user to select previously uploaded online content or online content provided by another user via the online service. The first user may select, for example, a video file by clicking on or touching an icon representing the online content in his/her interface. This selection is transferred via a communication network to the online service where it is, for example, processed by a server hosting the online service. The server may furthermore have access to one or more selection rules in order to retrieve a list of further users of the online service and provide the list of further users to the first user, for example via the communication network, wherein the list may be presented on the interface provided in the client device of the first user.

The first user may select one or more entries of further users in the list and transfer this selection to the server. Thereafter, the server or another component of the online service may start to invite the further users based on the selection of the first user. The users may be in different and separated locations, wherein one or more of the second users may operate one or more client devices that may access one or more servers hosting the online service via the communication network. The server may continue to receive answers from the further users, specifying if they want to join or not. The answers may be further used to define a group of users including a first user and the second users that have accepted the invitation.

Further to the definition of the group of users, the server or another processing component of the online service may continue checking access rules of a set of rules that define access criteria in relation to the online content. If requirements defined by the set of access rules are being met, the online content is automatically provided to the first user and at least one of the second users that have accepted the invitation in a simultaneous manner. Hence, the method allows users, which are selected according to selection rules, to view content together in accordance with requirements defined by the set of access rules.

According to one embodiment, at least one selection rule defines filtering users of the online service through interests, based on, for example, interests associated with the selected online content and interests associated with the first user. The main rule to simultaneously experience the content may relate to finding like-minded users of the online service. For example, users may find each other through their known interests. Hence, the server or another processing component of the online service may send back to the user a list of other users that may share the same interests. In addition or as an alternative, the users on the list may also share same or similar interests as defined in respect of the selected online content.

According to another embodiment, the method further comprises retrieving interests from an interest cloud maintained by the online service. For example, each element of the online service, such as online content, users, groups of users, and activities, may be associated with a data structure that may define one or more tags representing interests associated with the respective element. For example, a user of the online service may specify his or her particular interests in the data structure. Elements of the online service may also be interconnected with each other such as by links or references and, in addition, the online service may interrelate the data structures of the interconnected elements in that each element is further associated with the interests of the linked or connected other elements. The online service may use weights, levels or layers, and other methods to hierarchically distinguish the interests directly associated with the element and other interests associated with interlinked elements, or even interests inherited from further elements interlinked with the interlinked element, and so forth. Thus, the interest cloud may be defined as a graph or a similar structure representing the interlinked or inherited interests of the respective elements, or of all elements, of the online service. Hence, the interest cloud enables an automatic and highly flexible definition and derivation of interests.

In yet another embodiment, at least one selection rule defines filtering users of the social network based on an affiliation with the first user. For example, the user may filter the list of further users by defining relationships with the further users, and may limit the list to only known users, friends, and/or other affiliations. In particular, the first user may interlink with other users and may tag each link to another user, for example, as "friend," "family," "business," and others. Hence, the user may select online content for simultaneous experience and, furthermore, previously or concurrently define a selection rule specifying that, for example, only friends or other related users are to be included in the list of further users.

In one embodiment, at least one access rule defines criteria indicative of a number of second users accepting the invitation. For example, one of the access rules may specify that at least two users have to be in the group of users for the simultaneous experience, i.e., the first user and at least one second user. Similarly, one of the access rules may define that at least three users are to be members of the group of users, i.e., the first user and at least two or more second users.

In some embodiments, at least one access rule defines criteria indicative of at least one of the group of users engaging in an activity hosted by the online service. Hence, at least one of the users of the group of users has to execute an activity specified by the rule before the content is accessible. For example, the access rule may specify following a link or giving feedback on a certain profile or page of a social network. The activity may specify any activity available by the online service or an activity outside of the online service, such as an activity related to another online service accessible via the communication network.

According to another aspect, at least one access rule defines criteria indicative of at least one of the group of users paying a fee. The online content itself can be available for free. Alternatively, a certain fee has to be paid by at least one user of the group of users in order to unlock the online content. Other conditions may be attached to the same access rule or may define another access rule, like time-based permissions and others. Furthermore, the fee can be the same for one or more users to watch or may vary in the price if more users get permission to join the simultaneous experience.

In some embodiments, at least one of the access rules is defined by an owner of the online content. The owner may upload the online content, such as several video files, and may require that, for a simultaneous experience of one of these video files, a certain fee has to be paid.

According to one embodiment, at least one of the access and selection rules is defined by the first user. For example, the initiating first user may define that he or she wants to experience the online content with at least two or three other friends. The first user may also select several pre-defined or owner-defined access rules and may indicate which set of rules is to be applied during initiation of the simultaneous experience.

In yet another embodiment, the method further comprises establishing a stream to each one of the group of users, and streaming the online content to each user via the respective stream. A server or another processing component of the online service may, for example, identify the client devices of each one of the group of users and establish a stream between the same server or another dedicated server of the social network to the respective client device. As soon as the online content is released for the simultaneous experience, the respective server may start streaming the online content or may otherwise provide the online content to the users of the group.

In yet another embodiment, the method further comprises directly providing the online content to the first user, prior to providing the online content as the simultaneous experience. Thus, a user may start watching online content, for example as a preview, and may invite other users to watch the online content with him or her simultaneously via the online service.

In yet another embodiment, the method further comprises interrupting said providing of the online content to the group of users in response to the first user discontinuing the simultaneous experience. The invited users may access the same media stream as the first user and experience the online content via respective streams. However, it may be prohibited to consume online content which is disconnected from the first user. Thus, the online content may not be available after the first user discontinues the sharing. However, any second user may initiate a new request to view the online content as a group on their own.

In a some embodiments, the online service is a social network.

The processing steps of any embodiment may be combined with processing steps of another embodiment of the present disclosure in any combination. For example, at least one of the access rules may be defined by the owner of the online content and at least one of the access and selection rules may be defined by the first user according to embodiments of the present disclosure. Furthermore, the online service of each embodiment may be a social network.

According to another aspect, a computer-readable medium having instructions stored thereon is provided, wherein said instructions, when installed on a computing device hosting an online service, and in response to execution by the computing device, cause said computing device to automatically perform a method for enabling a plurality of users of the online service to simultaneously experience online content. In particular, the instructions may represent any processing step according to one or more of the embodiments of the disclosure, in any combination. The computing device may either remotely or locally access the computer-readable medium and transfer the instructions to a memory, such that the online service is configured to execute the method enabling the simultaneous experience, according to one of the embodiments. In some embodiments, the method comprises the processing steps of receiving from a first user of the online service a selection of online content provided on the online service; providing to the first user a list of further users of the online service in response to a set of selection rules defining selection criteria for users of the online service; receiving from the first user a selection of one or more second users from the list of further users; inviting the one or more second users to join a simultaneous experience of the online content; defining a group of users including the first user and at least one of the second users accepting the invitation; and providing the online content as the simultaneous experience to the group of users in response to a set of access rules defining access criteria for the online content. In some embodiments, the online service is a social network.

Furthermore, the online system according to the present disclosure hosts an online service for enabling a plurality of users of the online service to simultaneously experience online content. In particular, the system comprises a configuration component adapted to receive from a first user of the online service a selection of online content provided by the online service, to provide to the first user a list of further users of the online service in response to a set of selection rules defining selection criteria for users of the online service, and to receive from the first user a selection of one or more second users from the list of further users. The system further comprises a processing component adapted to invite the one or more second users to join a simultaneous experience of the online content, and to define a group of users including the first user and at least one of the second users accepting the invitation. In addition, the system includes an output component adapted to provide the online content as the simultaneous experience to the group of users in response to a set of access rules defining access criteria for the online content.

The configuration component, the processing component, and the output component of the online system may be implemented on one or more servers in the same location or distributed within a network on several servers hosting the online service. For example, the configuration component and the processing component may be implemented on a first server, which may be configured to receive selections of users with regard to online content and second users, and to further process these selections to eventually define the group of users. Thereafter, the configuration server may communicate with another server dedicated to providing online content, such as a rendering or streaming server of the online service. This dedicated component may start providing the online content either by directly checking the access rules or by receiving a signal or a message from the configuration component indicating that the access rules are satisfied.

The system allows for a flexible and integrated approach that enables a simultaneous experience of online content via an online service, such as within a social network.

According to one embodiment, the configuration component is further adapted to retrieve interests from an interest cloud maintained by the online service. Preferably, the interests are implemented via the interest cloud. For example, a dedicated processing component may filter the interests associated with each element of the online service and maintain the interest cloud in memory of the online system or, for example, in a storage or database device coupled to the online system.

According to another aspect, the output component is further configured to establish a stream to each one of the group of users, and to stream the online content to each user via the respective stream.

In yet another embodiment, the output component is further configured to directly provide the online content to the first user, prior to providing the online content as the simultaneous experience.

According to one embodiment, the output component is further configured to interrupt said providing of the online content to the group of users in response to the first user discontinuing the simultaneous experience.

The online system may comprise features of two or more of the preceding embodiments of the disclosure in any combination. For example, the online system of any embodiment may host a social network.

### BRIEF DESCRIPTION OF THE DRAWINGS

The specific features, aspects, and advantages of the present disclosure will be better understood with regard to the following description and accompanying drawings where:
- FIGURE 1: shows a system enabling simultaneous experience of online content according to an embodiment;
- FIGURE 2: shows an input interface enabling a user to select online content for simultaneous experience according to another embodiment;
- FIGURE 3: shows another input interface enabling a user to select view options that define access rules according to yet another embodiment;
- FIGURE 4: shows an interface providing a list of users which may be selected by a user according to an embodiment;
- FIGURE 5: shows another interface enabling a user to start a simultaneous experience of online content according to an embodiment; and
- FIGURE 6: depicts an output interface illustrating simultaneous experience of online content according to an embodiment.

### DETAILED DESCRIPTION

In the following description reference is made to the drawings which show by way of illustration various embodiments. It is to be understood that the embodiments may include changes in design and structure without departing from the scope of the claimed subject matter.

Online services, such as social networks, user networks, gaming networks, online platforms, online systems, communication and networking sites, and other systems and interfaces, which may be accessible via a network by a plurality of users operating client devices or other remote terminals, enable the users to share online content within the online service and to participate in activities provided by the online service. For example, each user is connected via a client device with at least one server of the online service. The respective server provides the user with one or more interfaces that allow the user to interact with the online service. For example, a server may generate a personalized page that is rendered on the client device of the user. The user may apply any interaction techniques available on his or her client device, such as mouse, keyboard, gesture recognition, or touch interfaces, and the interaction input may be transferred to the server where it may be further processed in order to initiate a certain action. Also, the input may be processed on the client device, in order to provide the server with commands or instructions on how to further proceed.

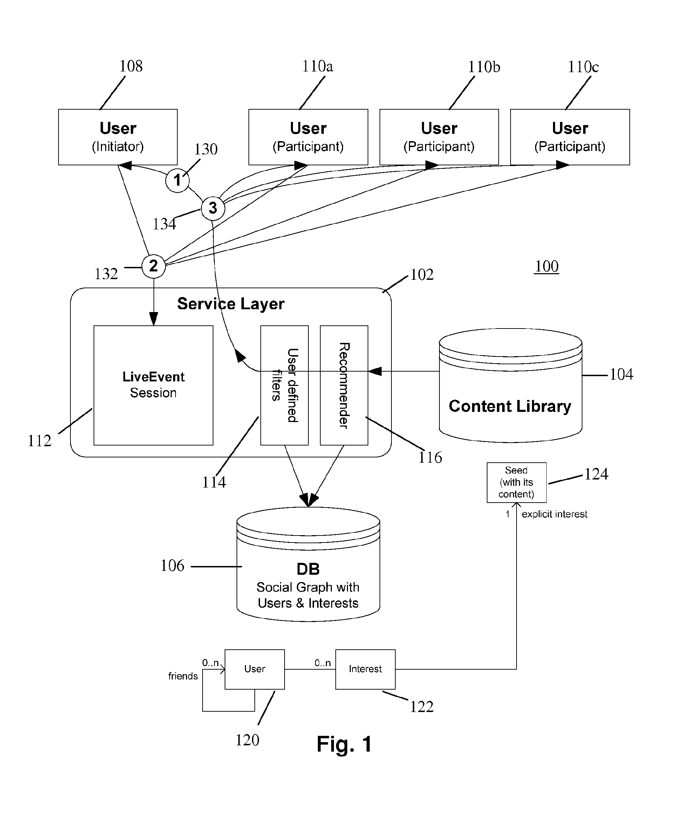

FIGURE 1 shows an example of a system that enables the simultaneous experience of online content for users of a social network or another online service according to an embodiment.

The system 100 may host the social network and comprise at least one processing component 102 and one or more databases, such as a content library 104 and a database 106. A plurality of users, such as an initator 108 and one or more participants 110a, 110b, 110c may connect to the processing component 102 via a communication network, which may be any kind of wire-based or wireless network, such as the Internet or a mobile network, and others. Each user 108, 110a, 110b, 110c may operate one or more client devices, which have respective means to connect to the processing component 102 via the communication network. In particular, the client devices of the users may connect to the social network and are automatically re-directed to the respective processing component 102.

The processing component 102 may represent a service layer and may include a representation of a session 112 which is associated with a simultaneous experience of online content. In addition, processing component 102 may include a data structure specifying one or more user-defined filters 114 that may comprise selection rules and access rules. Furthermore, the processing component 102 may comprise a recommender module 116 which may be configured to use the user-defined filters 114 in order to access the database 106 and the content library 104 for management of the initiation of the simultaneous experience and for providing of the online content. In particular, the recommender module 116 may use selection rules of the user-defined filters 114 to access a social graph of users of the social network, and their corresponding interests, in the database 106.

For example, based on a particular request of the initiator 108 for online content, the recommender 116 may access the database 106 and use selection rules to analyze the interests of the initiator 108 in the database 106 and the requested online content in the content library 104. By analyzing similar interests of users of the social network, the recommender module 116 may recommend potential participants. As an alternative, the recommender module 116 may even recommend an online content from the content library 104 to the initiator 108 based on the initiator's interests.

The initiator 108 may be notified by the recommender module 116 of the processing component 102 about potential participants and may further select one or more of the potential participants, such as users 110a, 110b, 110c, which may be thereafter invited to join the simultaneous experience. Once the invited participants 110a, 110b, 110c confirm the invitation and join the live event session 112 of the initiator 108, the processing component 102 or the recommender module 116 may further evaluate access rules of the user-defined filters 114 and only start streaming the selected online content to the initiator 108 and to participants 110a, 110b, 110c simultaneously if the rules are satisfied. In general, particular processing steps described to be performed by the processing component 102 may also be performed by other components or modules of the system 100, such as a configuration component (not shown) or an output component (not shown), which may be hosted on the same server device or on different interconnected server devices within the network. After initiation of the streaming of the selected online content, the initiator 108 may further control the streaming of the online content. For example, the initiator 108 may stop, pause or disconnect the simultaneous experience.

The online content may be represented using a container that stores the online content or a reference to the online content in combination with metadata characterizing the online content. The online content may refer to general media content, such as audio and video files, and any other content represented by files or digital data objects which may be provided by the online service, such as content that may be published on a social network. Furthermore, the container may represent any action hosted by the online service. For example, the content item may refer to a chat or a game session involving a plurality of users of the social network. The content item may be owned by a particular user who has uploaded the online content or initiated a respective activity. In addition, the content item may be linked to one or more other content items, for example, representing users which may participate in an activity represented by the content item. The media type can be of many different types, such as pre-recorded video, livestream video, audio only, video only, real-time rendered live stream audio/video, content that is uploaded, a stream provided by one of the users, preferably by the host or initiator 108 of the session 112, or others. In particular, any online content of any media type may be stored in the content library 104, which may be accessed via the processing component 102.

The user-defined filters 114 may comprise one or more selection rules and one or more access rules. The rules may, for example, specify that (1) the online content is part of a social network content, and (2) the other users are filtered through common interests. Further rules may include (3) the users have permissions to access certain other content; (4) the users are part of a specific group; (5) the users or at least one of the users pays a certain fee; and (6) at least one user of the group is engaged in a certain activity, such as registering to a certain service of the social network.

As indicated in FIGURE 1, each user, such as the initiator 108 and participants 110a, 110b, 110c can be represented by a User class 120 which may be linked to 0 ... n other users. This link may be further tagged as "friends," specifying that the linked users are friends. Other tags and categories of links, such as "business," "family," and others, also may be used. Each User class 120 may be linked to an Interest class 122. For example, each interest of a user may be represented as a tag within the Interest class 122. For each user an instance (object) of the User class 120 may be created and linked to other instances of the User class 120. Similarly, for each interest an instance (object) of the Interest class 122 may be created and linked to respective instances of the User class 120. This data structure including User objects and Interest objects may be stored in the database 106 as a social graph defining an interest cloud. The interests may furthermore be linked to online content, which may, for example, be represented by a Seed class 124 or a respective object, or another container data structure for the respective online content. Instances of the Seed class 124 may be stored in the content library 104. Thus, for example, the recommender module 116 may access the User object or data structure of the initiator 108 and may analyze the Interest objects or data structures linked to the User object in the database 106. Thereafter, the recommender module 116 may determine the potential participants based on similar interests and/or may also recommend a particular Seed representing online content that matches the interests of the initiator 108.

In general, the system 100 may be configured to recommend at 130 online content, such as a Seed 124 (e.g., a video), and potential participants based on interests of the initiator 108, and may invite the potential participants. The confirmations of the participants 110a, 110b, 110c may be received at 132. The participants 110a, 110b, 110c may use the confirmation to confirm that they join the same simultaneous experience, which is owned by the initiator 108. Thereafter, the selected Seed 124 may be streamed at 134 simultaneously to all participants 110a, 110b, 110c and the initiator 108. The initiator 108 may have full control over the streaming at 134 and may terminate the simultaneous experience at any time.

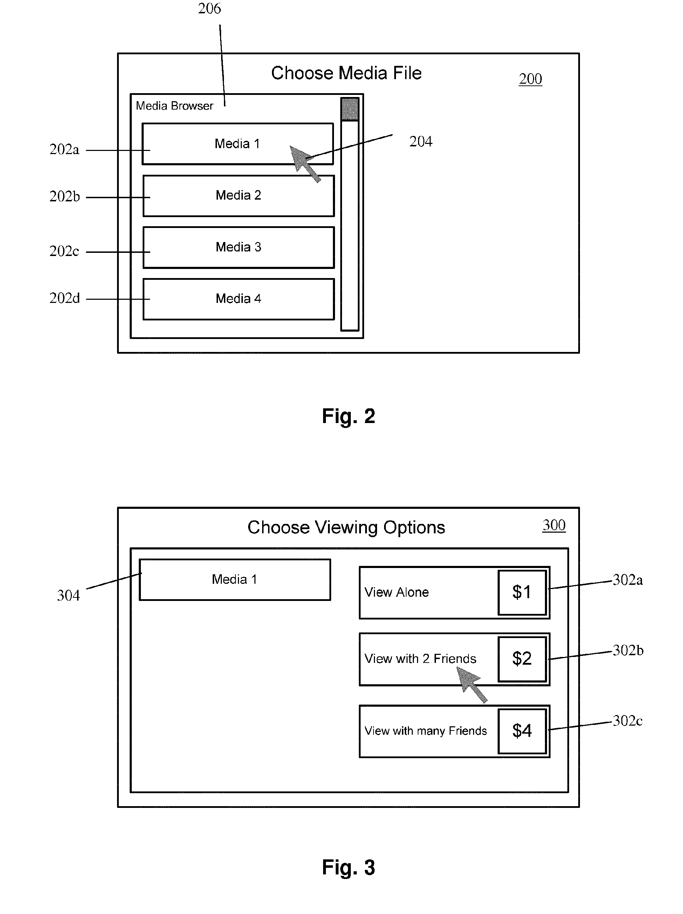

FIGURE 2 shows an input interface enabling a user to select an online content for simultaneous experience according to an embodiment of the disclosure. The input interface 200, which may, for example, be presented at a client device of a user, such as the initiator 108 of FIGURE 1, may provide the user with a list of selectable media items 202a-202d. Each media item 202a-202d may refer to a particular online content available via the online service, such as the social network. For example, the processing component 102 and the recommender module 116 of FIGURE 1 may be used to provide the initiator 108 with a suitable selection of online media content represented as media items 202a-202d that may, for example, be arranged in a browser list 206. The user may utilize local input devices and interaction techniques to, for example, move a mouse cursor 204 in order to click on a particular media item.

FIGURE 3 shows another input interface enabling a user to select view options that define access rules according to another embodiment of the disclosure. The interface 300 may provide the user with several selectable items 302a-302c that can be used to define one or more access rules. The access rules, for example, may be pre-defined with regard to an already-selected media content. For example, by selecting the media item 202a of FIGURE 2 and the respective online content, one or more access rules pre-defined by the owner of the online content may be retrieved by the online service, analyzed, and displayed as a selection list including the items 302a-302c. In addition, the interface 300 may further indicate the selected media content by displaying an item 304 and further information (not shown). For example, one user may select a video, an audio file, or another media content by triggering the item 202a and invite other users, such as two of his friends, to watch the media content together with him by triggering the item 302b of FIGURE 3. The pre-defined access rules may further require a fee of, for example, $2, which has to be paid for the option to watch the media content as a simultaneous experience with a limited group of two further users. Hence, the user may choose a view option by selecting one of the items 302a-302c that best matches his wish to watch the media content together with other users.

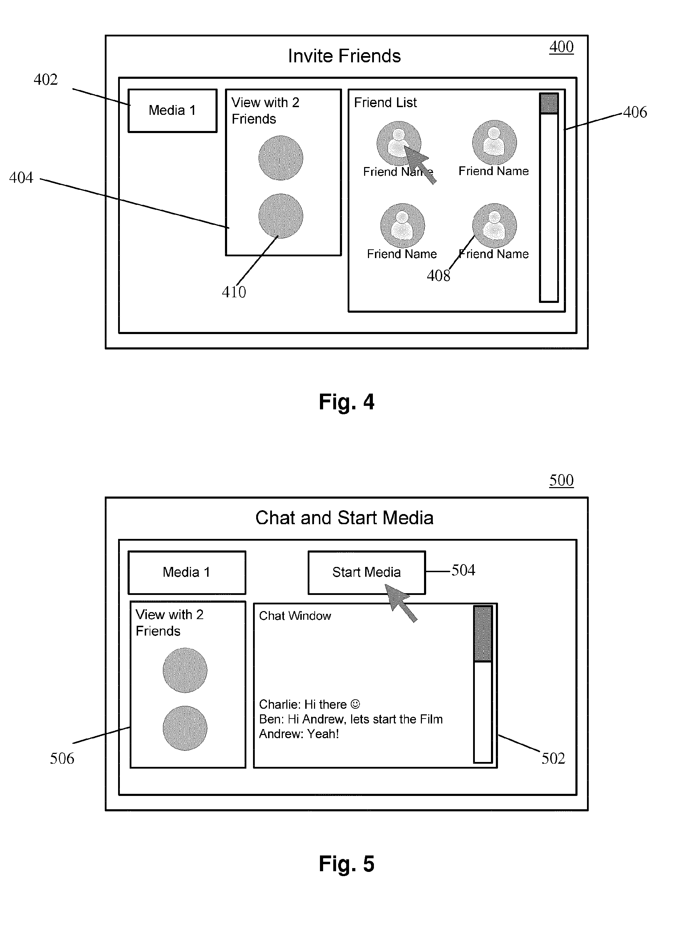

As shown in FIGURE 4, after selection of one of the items 302a-302c of FIGURE 3, according to one embodiment, the online service, such as the social network, may present a further configuration interface 400 to the user which enables a selection of further participants for the simultaneous experience. The interface 400 may indicate a selected media content 402 and a representation of access rules 404, which may correspond to the selected media item 202a of FIGURE 2 and item 302b of FIGURE 3, respectively. According to the access rules, the user may be allowed to select two further participants to join the simultaneous experience. The social network may, for example, search through other users of the social network, which are marked as friends of the user, in order to provide to the user a list of further users that may fit best to the interests of the user and to the interest cloud/tag words of the selected media content 402. The list of users may, for example, be presented as a browser list 406 including, for each user of the list, a visual representation 408 of the respective user. The user may utilize the browser list 406 to select two of his online friends, for example, by using the available interaction techniques of the user's client device. In order to facilitate the selection of the further users, the interface 400 may display a number of slots 410 according to the access rules, which enables the user to drag and drop user items 408 into respective slots 410.

FIGURE 5 shows another interface 500 which may be presented to a user after other users have been selected, for example, by using the interface 400 of FIGURE 4. After selection, the invited users may be notified by the online service and may enter a chat together with the host and the other invited users if they have accepted the invitation. The chat may be presented in a chat window 502 of the interface 500. The user may be provided with an interactive element 504 in the interface 500 in order to start the simultaneous experience of the media content, for example, as soon as everyone in the group indicates he or she is ready to start. Also, the interactive element 504 may only be enabled if all requirements defined by the access rules are satisfied. The user may also trigger the interactive element 504 in order to receive a preview of the media content immediately. However, in this case, the other users may not be allowed to experience the media content until all access criteria are being satisfied. Further to the chat window 502 the participants may also start a voice chat or any other messaging service provided by the online service.

The user or host of the session can also continue to invite other users if one of the invited users refuses to join the simultaneous experience, for example, by returning to and using the interface 400 of FIGURE 4. The maximum number of the participants as specified by one of the access rules, such as two in this example embodiment, may count at any time towards a limit, but doesn't limit the user to switch participants at any time if a slot in the list of participants 506 is empty.

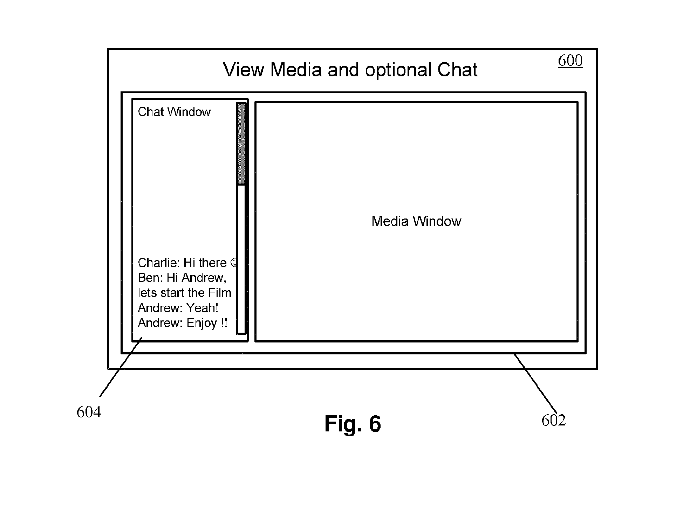

After all participants have agreed on starting the simultaneous experience of the media content and after the user has started the session, each participant may be provided with an output interface 600, as shown in FIGURE 6. The output interface 600 may comprise a media window 602 providing the rendered media content and further communication means, such as a chat window 604. The interface 600 may be presented on a display of each client device of one of the participants. Yet, it is to be understood that also other media content than a visual media content may be simultaneously experienced by the participants, such as audio content and even interactive content, for example a game session, and, therefore, the interface 600 may also comprise other rendering and presentation means than the media window 602. When starting the video, the chat may stay open by default, but can be minimized by each participant individually. The participants may switch any time from the chat to another communication means provided by the online service, such as a voice chat, a video chat, or no chat at all, or may minimize or mute the current active chat or communication option.

While some embodiments have been described in detail, it is to be understood that aspects of the disclosure can take many forms. In particular, the claimed subject matter may be practiced or implemented differently from the examples described and the described features and characteristics may be practiced or implemented in any combination. The embodiments shown herein are intended to illustrate rather than to limit the invention as defined by the claims.

## Claims

1. A computer-implemented method comprising:
receiving from a first user of an online service a selection of online content provided by the online service;
providing to the first user a list of further users of the online service in response to a set of selection rules defining selection criteria for users of the online service;
receiving from the first user a selection of one or more second users from the list of further users;
inviting the one or more second users to join a simultaneous experience of the online content;
defining a group of users including the first user and at least one of the second users accepting the invitation; and
providing the online content as the simultaneous experience to the group of users in response to a set of access rules defining access criteria for the online content.

2. The method of claim 1, wherein at least one selection rule defines filtering users of the online service through interests, based on at least one of interests associated with the selected online content and interests associated with the first user.

3. The method of claim 2, further comprising retrieving interests from an interest cloud maintained by the online service.

4. The method according to one of the preceding claims, wherein at least one selection rule defines filtering users of the online service based on an affiliation with the first user.

5. The method according to one of the preceding claims, wherein at least one access rule defines criteria indicative of one or more of a number of second users accepting the invitation, at least one of the group of users engaging in an activity hosted by the online service, and at least one of the group of users paying a fee.

6. The method according to one of the preceding claims, wherein at least one of the access rules is defined by an owner of the online content, and/or wherein at least one of the access and selection rules is defined by the first user.

7. The method according to one of the preceding claims, further comprising establishing a stream to each one of the group of users, and streaming the online content to each user via the respective stream, and/or further comprising directly providing the online content to the first user, prior to providing the online content as the simultaneous experience.

8. The method according to one of the preceding claims, further comprising interrupting said providing of the online content to the group of users in response to the first user discontinuing the simultaneous experience.

9. The method according to one of the preceding claims, wherein the online service is a social network.

10. A computer-readable medium having instructions stored thereon, wherein said instructions, in response to execution by a computing device hosting an online service, cause said computing device to perform a method according to one of the preceding claims.

11. An online system hosting an online service comprising:
a configuration component configured to receive from a first user of the online service a selection of online content provided by the online service, to provide to the first user a list of further users of the online service in response to a set of selection rules defining selection criteria for users of the online service, and to receive from the first user a selection of one or more second users from the list of further users;
a processing component configured to invite the one or more second users to join a simultaneous experience of the online content, and to define a group of users including the first user and at least one of the second users accepting the invitation; and
an output component configured to provide the online content as the simultaneous experience to the group of users in response to a set of access rules defining access criteria for the online content.

12. The system of claim 11, wherein at least one selection rule defines filtering users of the online service through interests, based on at least one of: interests associated with the selected online content and interests associated with the first user, wherein the interests are implemented via an interest cloud.

13. The system of claim 11 or 12, wherein at least one selection rule defines filtering users of the online service based on their affiliation with the first user.

14. The system according to one of the claims 11 to 13, wherein at least one access rule defines criteria indicative of a number of second users accepting the invitation, and/or wherein at least one access rule defines criteria indicative of at least one of the group of users paying a fee.

15. The system according to one of the claims 11 to 14, wherein the output component is further configured to establish a stream to each one of the group of users, and to stream the online content to each user via the respective stream.
